# EUROPÄISCHE PATENTSCHRIFT

(11) **EP 1 529 783 B1**
(45) Veröffentlichungstag und Bekanntmachung des Hinweises auf die Patenterteilung: **23.04.2008**
(21) Anmeldenummer: 04016470.9
(22) Anmeldetag: 13.07.2004
(51) Int. Cl.: C07F 9/6571, C08K 5/00

(54) **Derivative von 9,10-Dihydro-9-oxa-10-phosphaphenanthren-10-oxid**
Derivatives of 9,10-dihydro-9-oxa-10-phosphaphenanthren-10-oxide
Dérivés de 9,10-dihydro-9-oxa-10-phosphaphenanthrène-10-oxide

(30) Priorität: 16.07.2003 DE 10332291
(43) Veröffentlichungstag der Anmeldung: 11.05.2005
(73) Patentinhaber: Schill + Seilacher "Struktol" Aktiengesellschaft, 22113 Hamburg (DE)
(72) Erfinder: Dittrich, Uwe, 01445 Radebeul (DE); Just, Berthold, 22397 Hamburg (DE); Döring, Manfred, 76744 Wörth-Büchelberg (DE); Ciesielski, Michael, 06217 Merseburg (DE)
(74) Vertreter: UEXKÜLL & STOLBERG

(56) Entgegenhaltungen:
- EP-A- 0 806 429
- EP-A- 1 279 719
- DE-A1- 2 034 887
- US-A- 4 228 064
- US-A- 4 742 088

## Beschreibung

Die Erfindung betrifft neuartige Derivate von 9,10-Dihydro-9-oxa-10-phosphaphenanthren-10-oxid, Verfahren zu deren Herstellung und den Einsatz der Derivate zum Flammschutz von Natur- und Kunststoffen.

Der Einsatz von speziellen phosphororganischen Verbindungen zum Flammschutz von Natur- und Kunststoffen ist bekannt. Beispielsweise beschreibt die DE-OS-2 034 887 das 9,10-Dihydro-9-oxa-10-phosphaphenanthren-10-oxid (DOP) und Derivate davon als Flammbeständigkeitsmittel, wobei am Phosphoratom gegebenenfalls Substituenten vorgesehen sind.

Ferner offenbart die EP-A-0 806 429 Derivate der 4-Hydroxybutan-1-phosphinsäure und/oder ihres intramolekularen Esters, wobei am Phosphor eine Epoxyfunktionalisierung vorgesehen ist (siehe auch M.J. Alcon, M.A. Espinosa, M. Galia und V. Cadiz in Macromol. Rapid Comm. 2001, 22, 1265-71). Ein möglicher intramolekularer Phosphinsäureester ist DOP. Die Offenlegungsschrift beschäftigt sich eingehend mit der flammfesten Ausrüstung von Epoxidharzen.

Die EP-A1-1 279 719 beschreibt flammhemmende Faserbehandlungsmittel auf der Basis von Derivaten von DOP. Als Substituenten am Phosphor sind Alkyl-, Hydroxyalkyl-, Aralkyl-, Bernsteinsäureimid-, Hydroxy-, Alkoxy- oder Aralkoxygruppen vorgesehen. In der US-A-4 228 064 werden ähnliche Verbindungen zur Herstellung von flammhemmend ausgerüsteten Polyphenylenetherharz-Zusammensetzungen vorgeschlagen.

Die DE-A-100 06 592 offenbart Phosphinsäurederivate, unter anderem Phosphinsäureamide. In J. Organomet. Chem. 1968, 13, 199 werden die Herstellung von Methylenbisphosphonsäuretetraalkylestern, die Metallierung der Ester an der Methylengruppe und nachfolgende Umsetzungen beschrieben. Der Artikel beschäftigt sich nicht mit Flammschutzmitteln.

J. prakt. Chemie 1974, 316, 550 betrifft die Umsetzung von Orthoameisensäuretrialkylester mit wasserfreier phosphoriger Säure. Die Umsetzung mit Orthoester ergibt Phosphorigsäurediethylester ("O-Alkylierung") sowie Dialkoxymethylphosphonsäuredialkylester ("*P*-Dialkoxymethylierung"). Die Umsetzung ist auch mit P₄O₆ möglich.

In dem Chemical Abstract 39732u zu der Veröffentlichung Zh. Obshch. Khim. 37 (7), 1623-1626 (1967) wird die Umsetzung von Phosphonsäuredialkylestern mit Orthocarbonsäureestern beschrieben. Reaktionen von Phosphinsäureestern und ein Einsatz von Phosphinsäurederivaten beim Flammschutz werden nicht erwähnt.

In Tetrahedron Lett. 34, 1977, 2987-90 wird die Einwirkung von überschüssigem Trimethylorthoameisensaureester auf Phosphinsäure offenbart, die zur Bildung einer Vielzahl von Produkten führt. Es werden jedoch keine arylsubstituierten Phosphinsäuren umgesetzt. Auch beschäftigt sich der Artikel nicht mit Flammschutzmitteln, sondern mit der Aufklärung eines tautomeren Gleichgewichts von disubstituiertem Phosphinoxid.

Die Erfindung in der am 20. Februar 2002 beim Deutschen Patentund Markenamt eingereichten Patentanmeldung mit dem amtlichen Aktenzeichen DE 102 06 982.4 betrifft die Umsetzung von bestimmten Derivaten von DOP mit Alkoholen unter Einwirkung eines Orthocarbonsäureesters. Die Reaktionsprodukte sind Diester der hypophosphorigen Säure (phosphonigen Säure).

In Zh. Obshch. Khim. 34(9), 3125-6 (1964) beschreiben A.I. Razumov und V.V. Moskva die *P*-Dialkoxymethylierung von Phosphonsäurediestern.

Die Veresterung und N-Formylierung von Aminomethanbisphosphonsäuren mit Orthoameisensäuretriethylester wird in J. prakt. Chemie 1979, 321, Seiten 361 bis 369 beschrieben. Auf Flammschutzmittel wird nicht eingegangen.

Forderungen, die an eine zeitgemäße Flammschutzausrüstung für Natur- und Kunststoffe gestellt werden, sind unter anderem keine Verschlechterung der mechanischen und chemischen Eigenschaften, wie z.B. Festigkeit, Modul, Thermoformbeständigkeit, Beständigkeit gegen Lösungsmittel und aggressive Chemikalien. Eine Verschlechterung der elektrischen Eigenschaften ist jedoch genauso unerwünscht. Auch eine Verminderung der Haftung von Klebstoffen oder Haftung an Geweben bei der Prepreg- oder Komposit-Herstellung bei der Anwendung mit Epoxidharzen ist grundsätzlich auszuschließen. Auch dürfen Lagerstabilitäten von Ein-Komponenten-Systemen (z.B. Klebstoff, Prepregs), die bereits eine Härter enthalten, nicht negativ beeinflusst werden. Ausserdem besteht immer ein Bedarf nach Flammmschutzmitteln, die besonders thermisch und hydrolysestabil sind.

Im Hinblick auf diese Anforderungen besteht ein Bedürfnis nach einer verbesserten Flammschutzausrüstung für Natur- und Kunststoffe. Aufgabe der Erfindung ist es deshalb, neue Verbindungen und Zusammensetzungen bereitzustellen, die für - den genannten Einsatzzweck geeignet sind. Zur Aufgabe gehört auch die Schaffung eines Verfahrens zur Herstellung der neuen Verbindungen und Zusammensetzungen. Außerdem betrifft die Aufgabe die Bereitstellung neuer flammfest ausgerüstete Natur- oder Kunststoffe.

Diese Aufgaben werden durch die in den unabhängigen Patentansprüchen bezeichneten Ausführungsformen der Erfindung gelöst. Bevorzugte Ausführungsformen ergeben sich aus den abhängigen Ansprüchen.

Die neuartigen Verbindungen sind Derivate von 9,10-Dihydro-9-oxa-10-phosphaphenanthren-10-oxid mit der Formel I 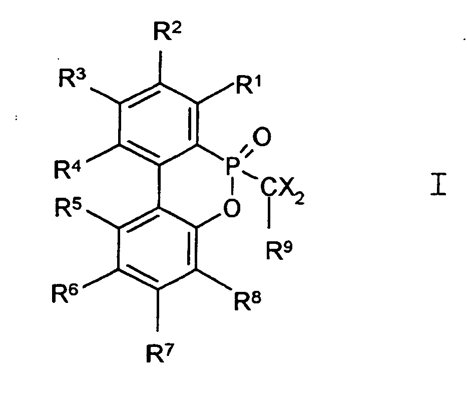 in der
R¹ bis R⁸ unabhängig voneinander ein Wasserstoffatom, Halogenatom oder eine Kohlenwasserstoffgruppe sind,
R⁹ ein Wasserstoffatom oder eine Kohlenwasserstoffgruppe ist und
die Reste X gleich oder verschieden sind und OR¹⁰ bedeuten und R¹⁰ gleiche oder verschiedene Kohlenwasserstoffgruppen sind,
wobei
- die Reste R¹ bis R¹⁰ unabhängig voneinander gegebenenfalls ein oder mehrere Heteroatome ausgewählt aus Sauerstoff, Stickstoff, Schwefel, Phosphor, Silicium und Halogen enthalten,
- zwei oder mehr der Reste R¹ bis R⁸ gegebenenfalls unter Ausbildung von einem oder mehreren Cyclen verknüpft sind und
- die Reste R¹⁰ gegebenenfalls unter Ausbildung eines Cyclus verknüpft sind..

Vorzugsweise sind die beiden Reste X gleich.

Die erfindungsgemäßen Derivate sind Ketale bzw. Acetale, bzw. Kombinationen davon, von *P*-Acyl- oder *P*-Formylsubstituierten Verbindungen und von 9,10-Dihydro-9-oxa-10-phosphaphenanthren-10-oxid und dessen Derivaten abgeleitet.

Ein besonderer Vorteil der erfindungsgemäßen Derivate besteht in ihrer universellen Einsetzbarkeit, denn durch eine geeignete Wahl von R¹⁰ ist es möglich, solche Funktionalisierungen in das Derivat einzuführen, die eine reaktive Einbindung der Derivate in das flammfest auszurüstende Natur- oder Kunstharz ermöglichen, was zu einer Verbesserung der mechanischen Eigenschaften des flammhemmend ausgerüsteten Natur- oder Kunststoffs führt. Andererseits ist die Herstellung von additiv flammfest ausgerüsteten Natur- und Kunststoffen möglich, wenn eine reaktive Einbindung über funktionelle Gruppen an R¹⁰ nicht gewünscht oder nicht notwendig ist.

Dabei zeichnen sich die erfindungsgemäßen Derivate durch eine hohe Temperatur- und Hydrolysestabilität aus, die unter anderem auf die besondere Funktionalisierung des Phosphoratoms zurückzuführen ist. Dieser Vorteil liegt unabhängig davon vor, ob das erfindungsgemäße Derivat in den flammfest ausgerüsteten Naturoder Kunststoff reaktiv eingebunden ist oder in diesem als Additiv vorliegt.

Obwohl ein Substitutionsmuster möglich ist, bei dem alle Reste R¹, R², R³ und R⁴ unabhängig voneinander ein Halogenatom oder eine Kohlenwasserstoffgruppe sind, betrifft eine bevorzugte Ausführungsform den Fall, dass von den Resten R¹, R², R³ und R⁴ mindestens zwei, vorzugsweise mindestens drei Wasserstoffatome sind, wobei insbesondere R¹, R², R³ und R⁴ alle Wasserstoffatome sind.

Obwohl ein Substitutionsmuster möglich ist, bei dem alle Reste R⁵, R⁶, R⁷ und R⁸ unabhängig voneinander ein Halogenatom oder eine Kohlenwasserstoffgruppe sind, betrifft eine bevorzugte Ausführungsform den Fall, dass von den Resten R⁵, R⁶, R⁷ und R⁸ mindestens zwei, vorzugsweise mindestens drei Wasserstoffatome sind, wobei insbesondere R⁵, R⁶, R⁷ und R⁸ alle Wasserstoffatome sind.

Dabei sind Substitutionsmuster an den aromatischen Ringsystemen bevorzugt, bei denen jeweils zwei der Reste R¹, R², R³ und R⁴ und der Reste R⁵, R⁶, R⁷ und R⁸ ein Halogenatom oder eine Kohlenwasserstoffgruppe sind, wobei bevorzugter nur jeweils einer der Reste R¹, R², R³ und R⁴, und der Reste R⁵, R⁶, R⁷ und R⁸ ein Halogenatom oder eine Kohlenwasserstoffgruppe ist und insbesondere alle Reste R¹ bis R⁸ Wasserstoffatome sind.

Für die im vorhergehenden Absatz beschriebenen bevorzugten Ausführungsformen sind C₁- bis C₆-Alkylgruppen als Kohlenwasserstoffgruppen bevorzugt. Falls die Kohlenwasserstoffgruppen ein Heteroatom enthalten, sind C₁- bis C₆-Alkoxygruppen die bevorzugten Reste für diese Ausführungsformen. Das Heteroatom ist dann also Sauerstoff.

In Formel I können die Reste R¹ bis R⁸ unabhängig voneinander die folgenden Bedeutungen haben:
Alkoxy: geradkettige oder verzweigte Alkylgruppen mit 1 bis 30 Kohlenstoffatomen (wie vorstehend genannt), welche über ein Sauerstoffatom (-O-) an das Gerüst, d.h. die 9,10-Dihydro-9-oxa-10-phosphaphenanthren-10-oxid-Struktur, gebunden sind.
Alkylthio: geradkettige oder verzweigte Alkylgruppen mit 1 bis 30 Kohlenstoffatomen (wie vorstehend genannt), welche über ein Schwefelatom (-S-) an das Gerüst gebunden sind.

Gegebenenfalls substituiertes Alkyl: gesättigte, geradkettige oder verzweigte Köhlenwasserstoffreste, insbesondere mit 1 bis 10 Kohlenstoffatomen, z.B. C₁- bis C₆-Alkyl wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 2,2-Dimethylpropyl, 1-Ethylpropyl, Hexyl, 1,1-Dimethylpropyl, 1, 2-Dimethylpropyl, 1-Methylpentyl, 2-Methyl-pentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dime-thylbutyl, 3,3-Dimethylbutyl, 1-Etylbutyl, 2-Etylbutyl, 1,3-Trimethylpropyl, 1,2,2-Trimethylpropyl, 1-Ethyl-1-methylpropyl und 1-Ethyl-2-methylpropyl.

Gegebenenfalls substituiertes Alkenyl: gesättigte, geradkettige oder verzweigte Kohlenwasserstoffreste, insbesondere mit 2 bis 10 Kohlenwasserstoffatomen und einer Doppelbindung in einer beliebigen Position, z.B. C₂- bis C₆-Alkenyl wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 1,1,2-Trimethyl-2-propenyl, 1-Ethyl-1-methyl-2-propenyl, 1-Ethyl-2-me-thyl-2-propenyl und 1-Ethyl-2-methyl-2-propenyl.

Gegebenenfalls substituiertes Alkinyl: geradkettige oder verzweigte Kohlenwasserstoffgruppen, insbesondere mit 2 bis 20 Kohlenwasserstoffatomen und einer Dreifachbindung in einer beliebigen Position, z.B. C₂- bis C₆-Alkinyl wie Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl,- 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl und 1-Ethyl-1-methyl-2-propinyl.

Ein gegebenenfalls substituierter, gesättigter oder ein- oder zweifach ungesättigter Ring, welcher neben Kohlenstoffatomen ein bis drei der folgenden Heteroatome als Ringglieder enthalten kann: Sauerstoff, Schwefel und Stickstoff, beispielsweise Carbocyclen wie Cyclopropyl, Cyclopentyl, Cyclohexyl, Cyclopent-2-enyl, Cyclohex-2-enyl, 5- bis 6-gliedrige, gesättigte oder ungesättigte Heterocyclen, enthaltend ein bis drei Stickstoffatome und/oder ein Sauerstoff- oder Schwefelatom wie 2-Tetrahydrofuranyl, 3-Tetrahydrofuranyl, 2-Tetrahydrothienyl, 3-Tetrahydrothienyl, 2-Pyrrolidinyl, 3-Pyrrolidinyl, 3-Isoxazolidinyl, 4-Isoxazolidinyl, 5-Isoxazolidinyl, 3-Isothiazolidinyl, 4-Isothiazolidinyl, 5-Isothiazolidinyl, 3-Pyrazolidinyl, 4-Pyrazolidinyl, 5-Pyrazolidinyl, 2-Oxazolidinyl, 4-Oxazolidinyl, 5-Oxazolidinyl, 2-Thiazolidinyl, 4-Thiazolidinyl, 5-Thiazolidinyl, 2-Imidazolidinyl, 4-Imidazolidinyl, 1,2,4-Oxadiazolidin-3-yl, 1,2,4-Oxadiazolidin-5-yl, 1,2,4-Thiadiazolidin-3-yl, 1,2,4-Thiadiazolidin-5-yl, 1,2,4-Triazolidin-3-yl, 1,3,4-Oxadiazolidin-2-yl, 1,3,4-Thiadiazolidin-2-yl, 1,3,4-Triazolidin-2-yl, 2,3-Dihydrofur-2-yl, 2,3-Dihydrofur-3-yl, 2,4-Dihydrofur-2-yl, 2,4-Dihydrofur-3-yl, 2,3-Dihydrothien-2-yl, 2,3-Dihydrothien-3-yl, 2,4-Dihydrothien-2-yl, 2,4-Dihydrothien-3-yl, 2,3-Pyrrolin-2-yl, 2,3-Pyrrolin-3-yl, 2,4-Pyrrolin-2-yl, 2,4-Pyrrolin-3-yl, 2,3-Isoxazolin-3-yl, 3,4-Isoxazolin-3-yl, 4,5-Isoxazolin-3-yl, 2,3-Isoxazolin-4-yl, 3,4-Isoxazolin-4-yl, 4,5-Isoxazolin-4-yl, 2,3-Isoxazolin-5-yl, 3,4-Isoxazolin-5-yl, 4,5-Isoxazolin-5-yl, 2,3-Isothiazolin-3-yl, 3,4-Isothiazolin-3-yl, 4,5-Isothiazolin-3-yl, 2,3-Isothiazolin-4-yl, 3,4-Isothiazolin-4-yl, 4,5-Isothiazolin-4-yl, 2,3-Isothiazolin-5-yl, 3,4-Isothiazolin-5-yl, 4,5-Isothiazolin-5-yl, 2,3-Dihydropyrazol-1-yl, 2,3-Dihydropyrazol-2-yl, 2,3-Dihydropyrazol-3-yl, 2,3-Dihydropyrazol-4-yl, 2,3-Dihydropyrazol-5-yl, 3,4-Dihydropyrazol-1-yl, 3,4-Dihydropyrazol-3-yl, 3,4-Dihydropyrazol-4-yl, 3,4-Dihydropyrazol-5-yl, 4,5-Dihydropyrazol-1-yl, 4,5-Dihydropyrazol-3-yl, 4,5-Dihydropyrazol-4-yl, 4,5-Dihydropyrazol-5-yl, 2,3-Dihydrooxazol-2-yl, 2,3-Dihydrooxazol-3-yl, 2,3-Dihydrooxazol-4-yl, 2,3-Dihydrooxazol-5-yl, 3,4-Dihydrooxazol-2-yl, 3,4-Dihydrooxazol-3-yl, 3,4-Dihydrooxazol-4-yl, 3,4-Dihydrooxazol-5-yl, 3,4-Dihydrooxazol-2-yl, 3,4-Dihydrooxazol-3-yl, 3,4-Dihydrooxazol-4-yl, 2-Piperidinyl, 3-Piperidinyl, 4-Piperidinyl, 1,3-Dioxan-5-yl, 2-Tetrahydropyranyl, 4-Tetrahydropyranyl, 2-Tetrahydrothienyl, 3-Tetrahydropyridazinyl, 4-Tetrahydropyridazinyl, 2-Tetrahydropyrimidinyl, 4-Tetrahydropyrimidinyl, 5-Tetrahydropyrimidinyl, 2-Tetrahydropyrazinyl, 1,3,5-Tetrahydro-triazin-2-yl und 1,2,4-Tetrahydrotriazin-3-yl, vorzugsweise 2-Tetrahydrofuranyl, 2-Tetrahydrothienyl, 2-Pyrrolidinyl, 3-Isoxazolidinyl, 3-Isothiazolidinyl, 1,3,4-Oxazolidin-2-yl, 2,3-Dihydrothien-2-yl, 4,5-Isoxazolin-3-yl, 3-Piperidinyl, 1,3-Dioxan-5-yl, 4-Piperidinyl, 2-Tetrahydropyranyl, 4-Tetrahydropyranyl.

Ein gegebenenfalls substituiertes ein- oder zweikerniges aromatisches Ringsystem, welches neben Kohlenstoffatomen ein bis vier Stickstoffatome oder ein oder zwei Stickstoffatome und ein Sauerstoff- oder Schwefelatom oder ein Sauerstoff- oder Schwefelatom als Ringglieder enthalten kann, d. h. Arylreste wie Phenyl und Naphthyl, vorzugsweise Phenyl oder 1- oder 2-Naphthyl, und Hetarylreste, beispielsweise 5-Ring-Hetero-aromaten enthalten ein bis drei Stickstoffatome und/oder ein Sauerstoffoder Schwefelatom wie 2-Furyl, 3-Furyl, 2-Thienyl, 3-Thienyl, 1-Pyrrolyl, 2-Pyrrolyl, 3-Pyrrolyl, 3-Isoxazolyl, 4-Isoxazolyl, 5-Isoxazolyl, 3-Isothiazolyl, 4-Isothiazolyl, 5-Isothiazolyl; 1-Pyrazolyl, 3-Pyrazolyl, 4-Pyrazolyl, 5-Pyra-zolyl, 2-Oxazolyl, 4-Oxazolyl, 5-Oxazolyl, 2-Thiazolyl, 4-Thia-zolyl, 5-Thiazolyl, 1-Imidazolyl, 2-Imidazolyl, 4-Imidazolyl, 1,2,4-Oxadiazol-3-yl, 1,2,4-Oxadiazol-5-yl, 1,2,4-Thiadiazol-3-yl, 1,2,4-Thiadiazol-5-yl, 1,2,5-Triazol-3-yl, 1,2,3-Triazol-4-yl, 1,2,3-Triazol-5-yl, 5-Tetrazolyl, 1,2,3,4-Thiatriazol und 1,2,3,4-Oxatriazol-5-yl, insbesondere 3-Isoxazolyl, 5-Isoxazolyl, 4-Oxazolyl, 4-Thiazolyl, 1,3,4-Oxadiazol-2-yl und 1,3,4- Thiadiazol-2-yl.

Sechsring-Heteroaromaten enthaltend ein bis vier Stickstoffatome als Heteroatome wie 2-Pyridinyl, 3-Pyridinyl, 4-Pyridinyl, 3-Pyradazinyl, 4-Pyradazinyl, 2-Pyrimidinyl, 4-Pyrimidinyl, 5-Pyrimidinyl, 2-Pyrazinyl, 1,3,5-Triazin-2-yl, 1,2,4-Triazin-3-yl und 1,2,4,5-Tetrazin-3-yl, insbesondere 2-Pyridinyl, 3-Pyridinyl, 4-Pyridinyl, 2-Pyrimidinyl, 4-Pyrimidinyl, 2-Pyrazinyl und 4-Pyrazinyl.

Der Zusatz "gegebenenfalls substituiert" in Bezug auf Alkyl-, Alkenyl- und Alkinylgruppen soll zum Ausdruck bringen, dass diese Gruppen partiell oder vollständig halogeniert sein können (d. h. die Wasserstoffatome dieser Gruppen können teilweise oder vollständig durch gleiche oder verschiedene Halogenatome wie vorstehend genannt (vorzugsweise Fluor, Chor und Brom, insbesondere Fluor und Chlor) ersetzt sein können und/oder einen bis drei, insbesondere einen der folgenden Reste tragen können:

Nitro, Cyano, C₁- bis C₄-Alkoxy, C₁- bis C₄-Alkoxycarbonyl oder ein gegebenenfalls substituiertes ein- oder zweikerniges aromatisches Ringsystem, welches neben Kohlenstoffatomen ein bis vier Stickstoffatome oder ein oder zwei Stickstoffatome und ein Sauerstoff- oder Schwefelatom oder ein Sauerstoff- oder Schwefelatom als Ringglieder enthalten kann, d.h. Arylreste wie Phenyl und Naphthyl, vorzugsweise Phenyl oder 1- oder 2-Naphthyl, und Hetarylreste, beispielsweise 5-Ring-Hetero-aromaten enthalten ein bis drei Stickstoffatome und/oder ein Sauerstoffoder Schwefelatom wie 2-Furyl, 3-Furyl, 2-Thienyl, 3-Thienyl, 1-Pyrrolyl, 2-Pyrrolyl, 3-Pyrrolyl, 3-Isoxazolyl, 4-Isoxazolyl, 5-Isoxazolyl, 3-Isothiazolyl, 4-Isothiazolyl, 5- Isothiazolyl, 1-Pyrazolyl, 3-Pyrazolyl, 4-Pyrazolyl, 5- Pyrazolyl, 2-Oxazolyl, 4-Oxazolyl, 5-Oxazolyl, 2-Thiazolyl, 4-Thiazolyl, 5-Thiazolyl, 1-Imidazolyl, 2-Imidazolyl, 4-Imidazolyl, 1,2,4-Oxadiazol-3-yl, 1,2,4-Oxadiazol-5-yl, 1,2,4-Thiadiazol-3-yl, 1,2,4-Thiadiazol-5-yl, 1,2,5-Triazol-3-yl, 1,2,3-Triazol-4-yl, 1,2,3-Triazol-5-yl, 5-Tetrazolyl, 1,2,3,4-Thiatriazol und 1,2,3,4-Oxatriazol-5-yl, insbesondere 3-Isoxazolyl, 5-Isoxa-zolyl, 4-Oxazolyl, 4-Thiazolyl, 1,3,4-Oxadiazol-2-yl und 1,3,4-Thiadiazol-2-yl.

Ferner können die Substituenten Sechsring-Heteroaromaten sein enthaltend ein bis vier Stickstoffatome als Heteroatome wie 2-Pyridinyl, 3-Pyridinyl, 4-Pyridinyl, 3-Pyradazinyl, 4-Pyradazinyl, 2-Pyrimidinyl, 4-Pyrimidinyl, 5-Pyrimidinyl, 2-Pyrazinyl, 1,3,5-Triazin-2-yl, 1,2,4-Triazin-3-yl und 1,2, 4, 5-Tetrazin-3-yl, insbesondere 2-Pyridinyl, 3-Pyridinyl, 4-Pyridinyl, 2-Pyrimidinyl, 4-Pyrimidinyl, 2-Pyrazinyl und 4-Pyrazinyl.

Der Zusatz "gegebenenfalls substituiert" in Bezug auf die cyclischen (gesättigten, ungesättigten oder aromatischen) Gruppen soll zum Ausdruck bringen, dass diese Gruppen partiell oder vollständig halogeniert sein können (d. h. die Wasserstoffatome dieser Gruppen können teilweise oder"vollständig durch gleiche oder verschiedene Halogenatome wie vorstehend genannt (vorzugsweise Fluor, Chor und Brom, insbesondere Fluor und Chlor) ersetzt sein können) und/oder einen bis drei, vorzugsweise einen der folgenden Reste tragen können: Nitro, Cyano, C₁- bis C₄-Alkyl, C₁- bis C₄-Alkoxy und C₁- bis C₄-Alkoxycarbonyl.

Die bei den Resten genannten ein- oder zweikernigen aromatischen oder heteroaromatischen Systeme können ihrerseits partiell oder vollständig halogeniert sein, d. h. die Wasserstoffatome dieser Gruppen können partiell oder vollständig durch Halogenatome wie Fluor, Chlor, Brom und Iod, vorzugsweise Fluor und Chlor ersetzt sein.

Diese ein- oder zweikernigen aromatischen oder heteroaromatischen Systeme können neben den bezeichneten Halogenatomen zusätzlich ein bis drei der folgenden Substituenten tragen:
Nitro, Cyano, Thiocyanato;
Alkyl, insbesondere C₁- bis C₆-Alkyl wie vorstehend genannt,
C₁- bis C₃₀-Alkoxy,
C₁- bis C₃₀-Alkylthio,
C₁- bis C₄-Alkylamino,
C₁- bis C₆-Alkylcarbonyl,
C₁- bis C₆-Alkoxycarbonyl,
C₁- bis C₆-Alkylaminocarbonyl,
C₁- bis C₆-Alkylcarboxyl,
C₁- bis C₆-Alkylcarbonylamino,
C₃- bis C₇-Cycloalkyl wie Cyclopropyl, Cyclobutyl, Cyclopentyl, Cyclohexyl und Cycloheptyl, vorzugsweise Cyclopropyl, Cyclopentyl und Cyclohexyl, insbesondere Cyclopropyl;
C₃- bis C₇-Cycloalkoxy wie Cyclopropyloxy, Cyclobutyloxy, Cyclopentyloxy, Cyclohexyloxy und Cycloheptyloxy, vorzugsweise Cyclopentyloxy und Cyclohexyloxy, insbesondere Cyclohexyloxy;
C₃- bis C₇-Cycloalkylthio wie Cyclopropylthio, Cyclobutylthio, Cyclopentylthio, Cyclohexylthio und Cycloheptylthio, vorzugsweise Cyclohexylthio;
C₃- bis C₇-Cycloalkylamino wie Cyclopropylamino, Cyclobutylamino, Cyclopentylamino, Cyclohexylamino und Cycloheptylamino, vorzugsweise Cyclopropylamino und Cyclohexylamino, insbesondere Cyclopropylamino;
weitere Reste für gegebenenfalls substituierte ein- oder zweikernige aromatische oder heteroaromatische Reste:
Alkenyl, Alkinyl, Halogenalkenyl, Halogenalkinyl, Alkenyloxy, Alkinyloxy, Halogenalkenyloxy, Halogenalkinyloxy, Alkenylthio, Alkinylthio, Alkylsulfoxy, Alkylsulfonyl, Alkenylsulfoxy, Alkinylsulfoxy, Alkinylsulfonyl.

Obwohl die Reste R¹ bis R⁸ Halogen sein können, wie Fluor, Chlor, Brom oder Iod, vorzugsweise Chlor oder Brom, sind Derivate bevorzugt, bei denen keiner der Reste R¹ bis R⁸ ein Halogenatom ist. Entsprechend sind Derivate bevorzugt, bei denen keiner der Reste R¹ bis R¹¹ Halogenatome aufweist. Halogenfreie Derivate sind also erfindungsgemäß bevorzugt.

In einer bevorzugten Ausführungsform ist R⁹ ein Wasserstoffatom, eine Alkyl- oder eine Arylgruppe, wobei die Begriffsdefinitionen zu den Resten R¹ bis R⁸ entsprechend gelten, und ein Wasserstoffatom oder eine Methylgruppe sind besonders bevorzugt.

Bevorzugte Reste R¹⁰ sind unabhängig voneinander ausgewählt aus Alkyl-, Alkenyl-, Alkinyl-, Aryl- und Glycidylgruppen, wobei die Begriffsdefinitionen zu den Resten R¹ bis R⁸ entsprechend gelten, und Methyl, Ethyl und Allyl sind besonders bevorzugt. In einer weiteren bevorzugten Ausführungsform sind die Reste R¹⁰ und R¹¹ gleich. Weitere Beispiele für die Reste R¹⁰ sind die oben in Bezug auf die Definitionen von R¹ bis R⁸ aufgelisteten, gegebenenfalls substituierten Alkyl-, Alkenylund Alkinylreste sowie die oben genannten, gegebenenfalls substituierten, gesättigten oder ein- oder zweifach ungesättigten Ringe.

Die Angaben zu bevorzugten Ausführungsformen für die Reste R¹ bis R¹¹ für das erfindungsgemäße Derivat gelten entsprechend auch für das erfihdungsgemäße Verfahren zur Herstellung der Derivate, die Verwendung der Derivate zum Flammschutz von Naturund Kunststoffen, das Verfahren zum flammfesten Ausrüsten von Natur- und Kunststoffen und den flammfest ausgerüsteten Naturoder Kunststoff.

Darüber hinaus betrifft die Erfindung ein Verfahren zur Herstellung der Derivate von 9,10-Dihydro-9-oxa-10-phosphaphenanthren-10-oxid gemäß obiger Formel I durch Umsetzung von 9,10-Dihydro-9-oxa-10-phosphaphenanthren-10-oxid (DOP) oder dessen Derivaten gemäß den Formeln IIa oder IIb 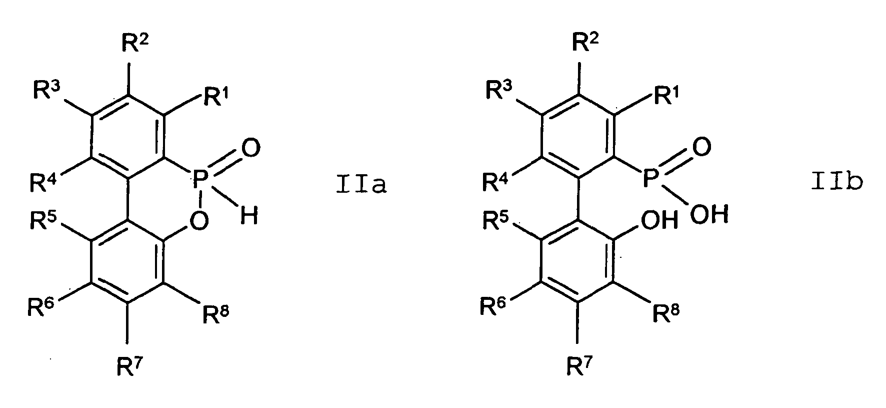 mit einem oder mehreren Orthocarbonsäurederivaten der Formel R⁹CX₃ und Gewinnung des Derivats, wobei
R¹ bis R⁸ unabhängig voneinander ein Wasserstoffatom, Halogenatom oder eine Kohlenwasserstoffgruppe sind,
R⁹ ein Wasserstoffatom oder eine Kohlenwasserstoffgruppe ist und die Reste X gleich oder verschieden sind und OR¹⁰ bedeuten und R¹⁰ gleiche oder verschiedene Kohlenwasserstoffgruppen sind,
wobei
- die Reste R¹ bis R¹⁰ unabhängig voneinander gegebenenfalls ein oder mehrere Heteroatome ausgewählt aus Sauerstoff, Stickstoff, Schwefel, Phosphor, Silicium und Halogen enthalten,
- zwei oder mehr der Reste R¹ bis R⁸ gegebenenfalls unter Ausbildung von einem oder mehreren Cyclen verknüpft sind und
- die Reste R¹⁰ gegebenenfalls unter Ausbildung eines Cyclus verknüpft sind.

Vorzugsweise sind die Reste X gleich.

Wenn bei der Beschreibung der vorliegenden Erfindung der Begriff DOP verwendet wird, so bezieht sich dies auf den Fall, dass alle Reste R¹ bis R⁸ in dem Edukt der Formel IIa Wasserstoffatome sind.

Das erfindungsgemäße Verfahren wird vorzugsweise in Gegenwart von saurem Katalysator durchgeführt, wobei der Katalysator vorzugsweise eine Protonensäure oder eine Lewis-Säure ist, bevorzugter saures Harz, Sulfonsäure, Mineralsäure, Trifluoressigsäure, BF₃, FeCl₃ oder SnCl₄, insbesondere Chlorwasserstoff oder konzentrierte wässrige Salzsäure.

Bei der Durchführung des erfindungsgemäßen Verfahrens ist es beispielsweise möglich, das Edukt der Formeln IIa/IIb und Orthocarbonsäurederivat (gegebenenfalls in aprotischem Lösungsmittel) vorzulegen und dann die Reaktion durchzuführen, gegebenenfalls unter Zusatz von Katalysator. Das molare Verhältnis von Orthocarbonsäurederivat zu Edukt der Formel IIa kann beispielsweise im Bereich von 50 : 1 bis 1,01 : 1 liegen. Bei Einsatz von Edukt gemäß Formel IIb kann das molare Verhältnis von Orthocarbonsäurederivat zu Edukt beispielsweise im Bereich von 50 : 1 bis 2,01 : 1 liegen. Bei dieser Ausführungsform wird für die intramolekulare Veresterung von Verbindung gemäß Formel IIb (eine Hydroxybiphenylphosphinsäure) vergleichsweise mehr Orthocarbonsäurederivat benötigt.

Die Reaktionstemperatur kann von -20°C bis zum Siedepunkt der nachstehend genannten Lösungsmittel betragen. Vorzugsweise wird bei Umgebungstemperatur umgesetzt. Der Druck ist normalerweise Normaldruck.

Gemäß einer Ausführungsform des erfindungsgemäßen Verfahrens wird die Umsetzung ohne Lösungsmittel durchgeführt. Es werden dann lediglich das Edukt der Formeln IIa/b und der Orthocarbonsäureester R⁹CX₃ (X = OR¹⁰) sowie gegebenenfalls der saure Katalysator miteinander umgesetzt. In einer solchen Ausführungsform wird der Orthocarbonsäureester im molaren Überschuss eingesetzt, bezogen auf das Edukt der Formeln IIa/b. Bei der lösungsmittelfreien Variante des erfindungsgemäßen Verfahrens liegt der molare Überschuss von Orthocarbonsäurederivat zu Edukt der Formel II üblicherweise höher, beispielsweise im Bereich von 40 : 1 bis 5 : 1, vorzugsweise 30 : 1 bis 7 : 1, insbesondere 25 : 1 bis 10 : 1, wie 20 : 1 bis 15 : 1.

Alternativ ist es möglich, die Umsetzung in Gegenwart von aprotischem Lösungsmittel durchzuführen, z.B. in Aromaten wie Benzol, Toluol, Xylol, chlorierten Kohlenwasserstoffen wie Chlorbenzol, Chloralkanen, Ethern wie Dioxan, Methyl-tert.butylether, Tetrahydrofuran, vorzugsweise in Toluol. Bei der Variante des erfindungsgemäßen Verfahrens, bei der die Umsetzung in Gegenwart von aprotischem Lösungsmittel durchgeführt wird, liegt der molare Überschuss von Orthocarbonsäurederivat zu Edukt der Formel II vergleichsweise geringer, beispielsweise im Bereich von 5 : 1 bis 1,1 : 1, bevorzugter 4 : 1 bis 1,5 : 1, insbesondere 3,5 : 1 bis 2,5 : 1, wie etwa 3 : 1.

In einer bevorzugten Ausführungsform findet die Umsetzung ohne Einsatz, bevorzugter in Abwesenheit, von protischem Lösungsmittel statt, insbesondere ohne Einsatz oder in Abwesenheit von Alkohol, Amin und/oder Wasser. Bei der Beschreibung der vorliegenden Erfindung werden bei der Umsetzung möglicherweise vorhandene, als Katalysatoren eingesetzte protische Substanzen und sich bei der Reaktion in molarer Menge, bezogen auf das Edukt der Formeln IIa/b, bildender Alkohol R¹⁰OH nicht als protisches Lösungsmittel angesehen. Falls notwendig, können derartige Substanzen und Wasser durch Zugabe eines stöchiometrischen Überschusses an Orthocarbonsäureester abgefangen werden.

Bei dem Verfahren zur Herstellung der erfindungsgemäßen Derivate ist R¹⁰ vorzugsweise unabhängig voneinander ausgewählt aus Alkyl-, Alkenyl-, Alkinyl-, Aryl- und Glycidylgruppen, bevorzugter Methyl, Ethyl und Allyl. Als Orthocarbonsäurederivate sind Orthocarbonsäureester R⁹C(OR¹⁰)₃ bevorzugt, bevorzugter Orthoameisensäureester, insbesondere Trimethylorthoformiat, Triethylorthoformiat oder Triallylorthoformiat. Es können aber auch Orthocarbonsäureester verwendet werden, bei denen die Reste R¹⁰ verschieden sind. Besonders bevorzugt ist die Ausführungsform des Verfahrens, bei der als Edukt der Formel IIa die Verbindung DOP (mit R¹ bis R⁸ gleich Wasserstoffatome) eingesetzt wird.

Darüber hinaus betrifft die Erfindung die Verwendung der erfindungsgemäßen Derivate zum Flammschutz von Natur- und Kunststoffen. Die Erfindung betrifft außerdem ein Verfahren zum flammfesten Ausrüsten von Natur- und Kunststoffen, bei dem einem Natur- oder Kunststoff ein oder mehrere erfindungsgemäße Derivate zugesetzt werden. Beispielsweise werden einem ungehärteten Natur- oder Kunststoff (Kunstharz) ein oder mehrere erfindungsgemäße Derivate zugesetzt und die Mischung aus ungehärtetem Natur- oder Kunststoff und erfindungsgemäßem Derivat dann zu einem flammhemmend ausgerüsteten, gehärteten Natur- oder Kunststoff gehärtet. Ferner betrifft die Erfindung flammfest ausgerüstete Natur- und Kunststoffe, die einen oder mehrere erfindungsgemäße Derivate enthalten, wobei die erfindungsgemäßen Derivate gegebenenfalls reaktiv (chemisch) eingebunden sind. Beispiele für bevorzugte erfindungsgemäße Naturstoffe sind Baumwolle, Wolle, Leinen und Hanf.

In einer bevorzugten Ausführungsform betrifft die Erfindung die flammfeste Ausrüstung von Epoxidharzen. Ein solches erfindungsgemäßes flammfestes Epoxidharz enthält vorzugsweise 2 bis 7 Gew.-% Phosphor in der Harzmasse. Dabei ist unter "Harzmasse" nur das Gesamtgewicht von eingesetztem Epoxidharz und erfindungsgemäßem Derivat der Formel I zu verstehen. Weitere gegebenenfalls eingesetzte Komponenten. wie Härter, Füllstoff oder Glasfasermatte bleiben bei dieser Bestimmung des Phosphorgehalts außer Betracht. Ein Vorteil des erfindungsgemäß flammfest ausgerüsteten Epoxidharzes besteht darin, dass es unter Verwendung eines reaktiven Derivats (z.B. R¹⁰ und/oder R¹¹ gleich Allyl oder Glycidyl) hergestellt werden kann. Mindestens ein Teil des reaktiven Derivats der Formel I reagiert dann mit dem Epoxidharz und/oder dem gegebenenfalls eingesetzten Härter. Es ist erfindungsgemäß bevorzugt, dass mindestens 50 Gew.-% des Phosphorgehalts chemisch in das Epoxidharz eingebunden sind.

Bevorzugte Ausführungsformen und Vorteile der vorliegenden Erfindung ergeben sich insbesondere aus den Beispielen.

### Beispiele:

### Beispiel 1:

### 9-Hydro-10-dimethoxymethyl-9-oxa-10-phosphaphenanthren-10-oxid aus 9,10-Dihydro-9-oxa-10-phosphaphenanthren-10-oxid (DOP) und Trimethylorthoformiat

0,20 mol (43,23 g) 9,10-Dihydro-9-oxa-10-phosphaphenanthren-10-oxid werden bei Raumtemperatur in 200 ml Toluol suspendiert. In diese farblose Suspension werden unter Rühren 0,55 mol (58,37 g) Trimethylorthoformiat in einem Guß zugegeben. Nach 5 min Rühren tropft man 3,6 ml konz. HCl innerhalb von 10 min zu. Nach vollständiger Katalysatorzugabe liegt eine klare, farblose Lösung vor. Man rührt die Reaktionsmischung bei Raumtemperatur noch 30 min und entfernt anschließend alle flüchtigen Bestandteile im Feinvakuum (0,01 mbar). Das Produkt ist ein farbloser Feststoff. Ausbeute: 56,88 g, 98 % d. Theorie.

### Beispiel 2:

### 9-Hydro-10-diethoxymethyl-9-oxa-10-phosphaphenanthren-10-oxid aus 9,10-Dihydro-9-oxa-10-phosphaphenanthren-10-oxid und Triethylorthoformiat

0,45 mol (97,27 g) 9,10-Dihydro-9-oxa-10-phosphaphenanthren-10-oxid werden bei Raumtemperatur in 400 ml Toluol suspendiert. In diese farblose Suspension werden unter Rühren 1,35 mol (200,37 g) Triethylorthoformiat in einem Guß zugegeben. Nach 5 min. Rühren tropft man 1,5 ml konz. HCl innerhalb von 5 min zu. Nach vollständiger Katalysatorzugabe liegt eine klare, farblose Lösung vor. Man rührt die Reaktionsmischung bei Raumtemperatur noch 30 min und entfernt anschließend alle flüchtigen Bestandteile im Feinvakuum (0,01 mbar). Das Produkt ist ein farbloser Feststoff. Ausbeute: 136,07 g, 95 % d. Theorie.

### Beispiel 3:

### 9-Hydro-10-diethoxymethyl-9-oxa-10-phosphaphenanthren-10-oxid aus 9,10-Dihydro-9-oxa-10-phosphaphenanthren-10-oxid und Triethylorthoformiat (Variante ohne Katalysator)

0,10 mol (21,62 g) 9,10-Dihydro-9-oxa-10-phosphaphenanthren-10-oxid werden bei Raumtemperatur in 1,80 mol (267,66 g) Triethylorthoformiat suspendiert. Die Reaktionsmischung wird zum Rückfluß erhitzt, wobei sich eine klare, farblose Lösung bildet. Nach siebentägigen Kochen unter Rückfluß läßt man auf Raumtemperatur abkühlen und entfernt alle flüchtigen Bestandteile im Feinvakuum (0,01 mbar). Das Produkt ist ein farbloser Feststoff. Ausbeute: 29,60 g, 93 % d. Theorie.

### Beispiel 4:

### 9-Hydro-10-diallyloxymethyl-9-oxa-10-phosphaphenanthren-10-oxid aus 9,10-Dihydro-9-oxa-10-phosphaphenanthren-10-oxid und Triallylorthoformiat

0,10 mol (21,62 g) 9,10-Dihydro-9-oxa-10-phosphaphenanthren-10-oxid werden bei Raumtemperatur in 100 ml Toluol suspendiert. In diese farblose Suspension werden unter Rühren 0,40 mol (73,69 g) Triallylorthoformiat in einem Guß zugegeben. Nach 5 min Rühren leitet man trockenes Chlorwasserstoffgas in die Suspension, ca. 2 Blasen pro Sekunde. Nach 5 Minuten wird der Gasstrom abgestellt; es liegt eine klare, farblose Lösung vor. Man rührt die Reaktionsmischung bei Raumtemperatur noch 3 h und entfernt anschließend alle flüchtigen Bestandteile im Feinvakuum (0,01 mbar) zunächst bei Raumtemperatur, anschließend bei 100°C.

Das Produkt ist eine farblose, hochviskose Flüssigkeit. Ausbeute: 32,86 g, 96 % d. Theorie.

## Patentansprüche

1. Derivate von 9,10-Dihydro-9-oxa-10-phosphaphenanthren-10-oxid mit der Formel I 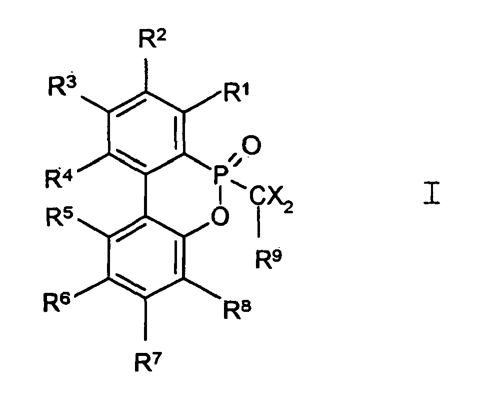 in der
R¹ bis R⁸ unabhängig voneinander ein Wasserstoffatom, Halogenatom oder eine Kohlenwasserstoffgruppe sind,
R⁹ ein Wasserstoffatom oder eine Kohlenwasserstoffgruppe ist und
die Reste X gleich oder verschieden sind und OR¹⁰ bedeuten und R¹⁰ gleiche oder verschiedene Kohlenwasserstoffgruppen sind,
wobei
- die Reste R¹ bis R¹⁰ unabhängig voneinander gegebenenfalls ein oder mehrere Heteroatome ausgewählt aus Sauerstoff, Stickstoff, Schwefel, Phosphor, Silicium und Halogen enthalten,
- zwei oder mehr der Reste R¹ bis R⁸ gegebenenfalls unter Ausbildung von einem oder mehreren Cyclen verknüpft sind und
- die Reste R¹⁰ gegebenenfalls unter Ausbildung eines Cyclus verknüpft sind.

2. Derivat nach Anspruch 11, **dadurch gekennzeichnet, dass** die beiden Reste X gleich sind.

3. Derivat nach Anspruch 1 oder 2, **dadurch gekennzeichnet, dass** R⁹ ein Wasserstoffatom, eine Alkyl- oder eine Arylgruppe ist, vorzugsweise ein Wasserstoffatom oder eine Methylgruppe.

4. Derivat nach einem der vorhergehenden Ansprüche, **dadurch gekennzeichnet, dass** R¹⁰ unabhängig voneinander ausgewählt sind aus Alkyl-, Alkenyl-, Alkinyl-, Aryl- und Glycidylgruppen, vorzugsweise Methyl, Ethyl und Allyl.

5. Derivat nach einem der vorhergehenden Ansprüche, **dadurch gekennzeichnet, dass** die Reste R¹⁰ gleich sind.

6. Derivat nach einem der vorhergehenden Ansprüche, **dadurch gekennzeichnet, dass** von den Resten R¹, R², R³ und R⁴ mindestens zwei, vorzugsweise mindestens drei Wasserstoffatome sind, wobei insbesondere R¹, R², R³ und R⁴ alle Wasserstoffatome sind.

7. Derivat nach einem der vorhergehenden Ansprüche, **dadurch gekennzeichnet, dass** von den Resten R⁵, R⁶, R⁷ und R⁸ mindestens zwei, vorzugsweise mindestens drei Wasserstoffatome sind, wobei insbesondere R⁵, R⁶, R⁷ und R⁸ alle Wasserstoffatome sind.

8. Verfahren zur Herstellung von Derivaten von 9,10-Dihydro-9-oxa-10-phosphaphenanthren-10-oxid durch Umsetzung von 9,10-Dihydro-9-oxa-10-phosphaphenanthren-10-oxid oder dessen Derivaten gemäß den Formeln IIa oder IIb 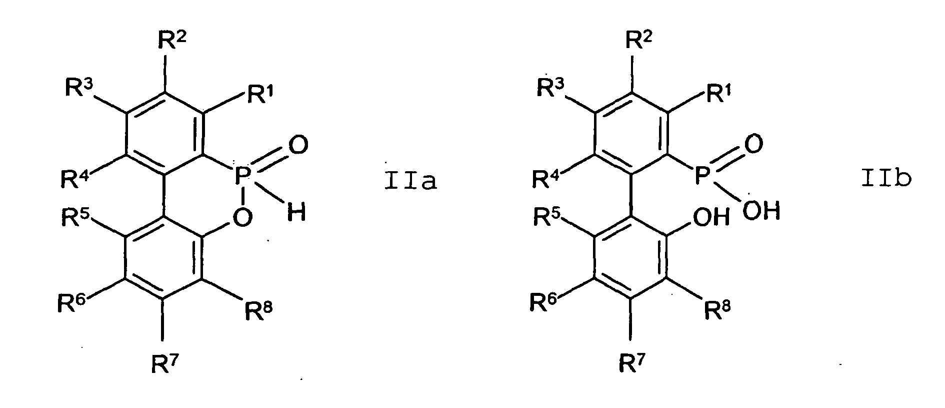 mit einem oder mehreren Orthocarbonsäurederivaten der Formel R⁹CX₃ und Gewinnung des Derivats, wobei
R¹ bis R⁸ unabhängig voneinander ein Wasserstoffatom, Halogenatom oder eine Kohlenwasserstoffgruppe sind,
R⁹ ein Wasserstoffatom oder eine Kohlenwasserstoffgruppe ist und
die Reste X gleich oder verschieden sind und OR¹⁰ bedeuten und R¹⁰ gleiche oder verschiedene Kohlenwasserstoffgruppen sind,
wobei
- die Reste R¹ bis R¹⁰ unabhängig voneinander gegebenenfalls ein oder mehrere Heteroatome ausgewählt aus Sauerstoff, Stickstoff, Schwefel, Phosphor, Silicium und Halogen enthalten,
- zwei oder mehr der Reste R¹ bis R⁸ gegebenenfalls unter Ausbildung von einem oder mehreren Cyclen verknüpft sind und
- die Reste R¹⁰ gegebenenfalls unter Ausbildung eines Cyclus verknüpft sind.

9. Verfahren nach Anspruch 8, **dadurch gekennzeichnet, dass** die Umsetzung in Gegenwart von saurem Katalysator durchgeführt wird, wobei der Katalysator vorzugsweise eine Protonensäure oder eine Lewissäure ist, bevorzugter saures Harz, Sulfonsäure, Mineralsäure, Trifluoressigsäure, BF₃; FeCl₃, SnCl₄, insbesondere Chlorwasserstoff oder konzentrierte Salzsäure.

10. Verfahren nach Anspruch 8 oder 9, **dadurch gekennzeichnet, dass** die Umsetzung in Gegenwart von aprotischem Lösungsmittel durchgeführt wird, vorzugsweise Toluol.

11. Verfahren nach einem Ansprüche 9 bis 10, **dadurch gekennzeichnet, dass** die Umsetzung ohne Einsatz von protischem Lösungsmittel durchgeführt wird.

12. Verfahren nach einem der Ansprüche 8 bis 11, **dadurch gekennzeichnet, dass** R⁹ ein Wasserstoffatom, eine Alkyl- oder Arylgruppe ist, vorzugsweise ein Wasserstoffatom oder eine Methylgruppe.

13. Verfahren nach einem der Ansprüche 8 bis 12, **dadurch gekennzeichnet, dass** die beiden Reste X gleich sind.

14. Verfahren nach einem der Ansprüche 8 bis 13, **dadurch gekennzeichnet, dass** R¹⁰ und R¹¹ unabhängig voneinander ausgewählt sind aus Alkyl-, Alkenyl-, Alkinyl-, Aryl- und Glycidylgruppen, vorzugsweise Methyl, Ethyl und Allyl.

15. Verfahren nach Anspruch 14, **dadurch gekennzeichnet, dass** das Orthöcarbonsäurederivat ein Orthocarbonsäureester R⁹C(OR¹⁰)₃ ist, vorzugsweise ein Orthoameisensäureester, bevorzugter Trimethylorthoformiat, Triethylorthoformiat oder Triallylorthoformiat.

16. Verfahren nach einem der Ansprüche 8 bis 14, **dadurch gekennzeichnet, dass** die Reste R¹⁰ gleich sind.

17. Verwendung der Derivate gemäß einem der Ansprüche 1 bis 7 zum Flammschutz von Natur- und Kunststoffen.

18. Verfahren zum flammfesten Ausrüsten von Natur- und Kunststoffen, bei dem einem Natur- "oder Kunststoff ein oder mehrere Derivate gemäß einem der Ansprüche 1 bis 7 zugesetzt werden.

19. Flammfest ausgerüsteter Natur- oder Kunststoff, der ein oder mehrere Derivate gemäß einem der Ansprüche 1 bis 7 enthält, wobei das Derivat gegebenenfalls chemisch eingebunden ist.

20. Kunststoff nach Anspruch 19, der ein Epoxidharz ist.

21. Verwendung nach Anspruch 17, wobei der Kunststoff ein Epoxidharz ist.

22. Verfahren nach Anspruch 18, wobei der Kunststoff ein Epoxidharz ist.

## Claims

1. A derivative of 9,10-dihydro-9-oxa-10-phosphaphenanthrene-10-oxide with Formula I 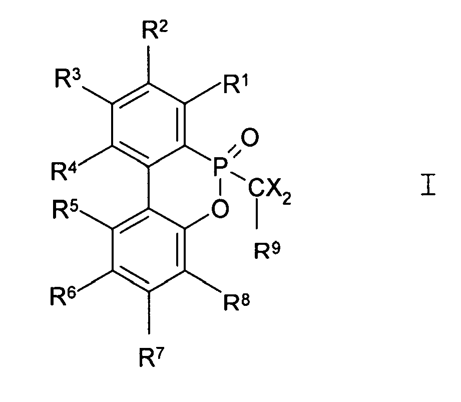 in which
R¹ to R⁸ independently of each other are a hydrogen atom, halogen atom or a hydrocarbon group,
R⁹ is a hydrogen atom or a hydrocarbon group and
the radicals X are the same or different and mean OR¹⁰ and R¹⁰ are the same or different hydrocarbon groups,
- the radicals R¹ to R¹⁰ independently of each other optionally containing one or more heteroatoms selected from oxygen, nitrogen, sulphur, phosphorus, silicon and halogen,
- two or more of the radicals R¹ to R⁸ optionally being linked by forming one or more cycles and
- the radicals R¹⁰ optionally being linked by forming a cycle.

2. The derivative according to claim 11, **characterized in that** the two of the radicals X are the same.

3. The derivative according to claim 1 or 2, **characterized in that** R⁹ is a hydrogen atom, an alkyl or an aryl group, preferably a hydrogen atom or a methyl group.

4. The derivative according to one of the preceding claims, **characterized in that** R¹⁰ independently of each other are selected from alkyl, alkenyl, alkinyl, aryl and glycidyl groups, preferably methyl, ethyl and allyl.

5. The derivative according to one of the preceding claims, **characterized in that** the radicals R¹⁰ are the same.

6. The derivative according to one of the preceding claims, **characterized in that**, of the radicals R¹, R², R³ and R⁴, at least two, preferably at least three are hydrogen atoms, wherein in particular R¹, R², R³ and R⁴ are all hydrogen atoms.

7. The derivative according to one of the preceding claims, **characterized in that**, of the radicals R⁵, R⁶, R⁷ and R⁸, at least two, preferably at least three are hydrogen atoms, where in particular R⁵, R⁶, R⁷ and R⁸ are all hydrogen atoms.

8. Process for the preparation of derivatives of 9,10-dihydro-9-oxa-10-phosphaphenanthrene-10-oxide by reaction of 9,10-dihydro-9-oxa-10-phosphaphenanthrene-10-oxide or its derivatives according to Formulae IIa or IIb 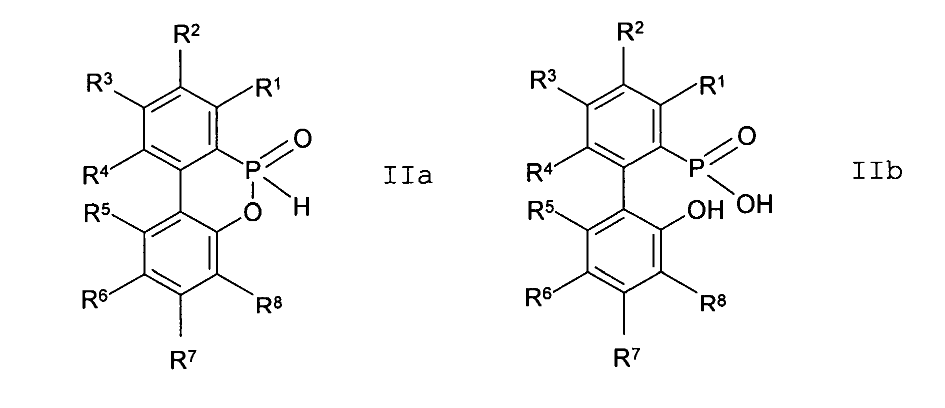 with one or more ortho carboxylic acid derivatives of Formula R⁹CX₃ and recovery of the derivative, wherein
R¹ to R⁸ independently of each other are a hydrogen atom, halogen atom or a hydrocarbon group,
R⁹ is a hydrogen atom or a hydrocarbon group and
the radicals X are the same or different and mean OR¹⁰ and R¹⁰ are the same or different hydrocarbon groups,
- the radicals R¹ to R¹⁰ independently of each other optionally containing one or more heteroatoms selected from oxygen, nitrogen, sulphur, phosphorus, silicon and halogen,
- two or more of the radicals R¹ to R⁸ optionally being linked by forming one or more cycles and
- the radicals R¹⁰ optionally being linked by forming a cycle.

9. The process according to claim 8, **characterized in that** the reaction is carried out in the presence of acid catalyst, the catalyst preferably being a protonic acid or a Lewis acid, preferably acid resin, sulphonic acid, mineral acid, trifluoroacetic acid, BF₃, FeCl₃, SnCl₄, in particular hydrogen chloride or concentrated hydrochloric acid.

10. The process according to claim 8 or 9, **characterized in that** the reaction is carried out in the presence of aprotic solvent, preferably toluene.

11. The process according to one of claims 9 to 10, **characterized in that** the reaction is carried out without the use of protic solvent.

12. The process according to one of claims 8 to 11, **characterized in that** R⁹ is a hydrogen atom, an alkyl or aryl group, preferably a hydrogen atom or a methyl group.

13. The process according to one of claims 8 to 12, **characterized in that** the two radicals X are the same.

14. The process according to one of claims 8 to 13, **characterized in that** R¹⁰ and R¹¹ independently of each other are selected from alkyl, alkenyl, alkinyl, aryl and glycidyl groups, preferably methyl, ethyl and allyl.

15. The process according to claim 14, **characterized in that** the ortho carboxylic acid derivative is an ortho ester R⁹C(OR¹⁰)₃, preferably an orthoformic acid ester, preferably trimethyl orthoformate, triethyl orthoformate or triallyl orthoformate.

16. The process according to one of claims 8 to 14, **characterized in that** the radicals R¹⁰ are the same.

17. The use of the derivatives according to one of claims 1 to 7 for flame protection of natural products and plastics.

18. Process for flameproof finishing of natural products and plastics, in which one or more derivatives according to one of claims 1 to 7 are added to a natural product or plastic.

19. A flameproof-finished natural product or plastic which contains one or more derivatives according to one of claims 1 to 7, the derivative optionally being chemically bound.

20. A plastic according to claim 19 wherein the plastic is an epoxy resin.

21. The use according to claim 17, wherein the plastic is an epoxy resin.

22. The process according to claim 18, wherein the plastic is an epoxy resin.

## Revendications

1. Dérivés de 9,10-dihydro-9-oxa-10-phosphaphénanthrène-10-oxyde de formule I 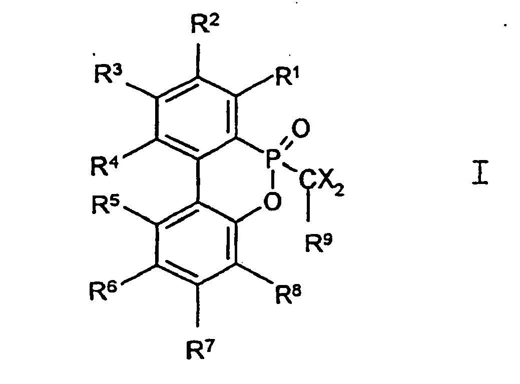 dans laquelle
R¹ à R⁸ représentent, indépendamment les uns des autres, un atome d'hydrogène, un atome d'halogène ou un groupe hydrocarboné,
R⁹ est un atome d'hydrogène ou un groupe hydrocarboné et
les restes X sont identiques ou différents et représentent OR¹⁰, et R¹⁰ sont des groupes hydrocarbonés identiques ou différents,
- les radicaux R¹ à R¹⁰ contenant, indépendamment les uns des autres, éventuellement un ou plusieurs hétéroatomes choisis parmi les atomes d'oxygène, d'azote, de soufre, de phosphore, de silicium et d'halogène,
- deux ou plus des radicaux R¹ à R⁸ étant éventuellement liés pour former un ou plusieurs cycles et
- les radicaux R¹⁰ étant éventuellement liés pour former un cycle.

2. Dérivé selon la revendication 1, **caractérisé en ce que** les deux restes X sont identiques.

3. Dérivé selon la revendication 1 ou 2, **caractérisé en ce que** R⁹ est un atome d'hydrogène, un groupe alkyle ou un groupe aryle, de préférence un atome d'hydrogène ou un groupe méthyle.

4. Dérivé selon l'une quelconque des revendications précédentes, **caractérisé en ce que** R¹⁰ sont choisis, indépendamment l'un de l'autre, parmi des groupes alkyle, alcényle, alcynyle, aryle et glycidyle, de préférence méthyle, éthyle et allyle.

5. Dérivé selon l'une quelconque des revendications précédentes, **caractérisé en ce que** les radicaux R¹⁰ sont identiques.

6. Dérivé selon l'une quelconque des revendications précédentes, **caractérisé en ce que** les radicaux R¹, R², R³ et R⁴ sont au moins deux, de préférence au moins trois atomes d'hydrogène, en particulier R¹, R², R³ et R⁴ sont tous des atomes d'hydrogène.

7. Dérivé selon l'une quelconque des revendications précédentes, **caractérisé en ce qu'**au moins deux, de préférence au moins trois des radicaux R⁵, R⁶, R⁷ et R⁸ sont des atomes d'hydrogène, en particulier R⁵, R⁶, R⁷ et R⁸ sont tous des atomes d'hydrogène.

8. Procédé pour la préparation de dérivés de 9,10-dihydro-9-oxa-10-phosphaphénanthrène-10-oxyde par la réaction de 9,10-dihydro-9-oxa-10-phosphaphénanthrène-10-oxyde ou de ses dérivés selon les formules IIa ou IIb 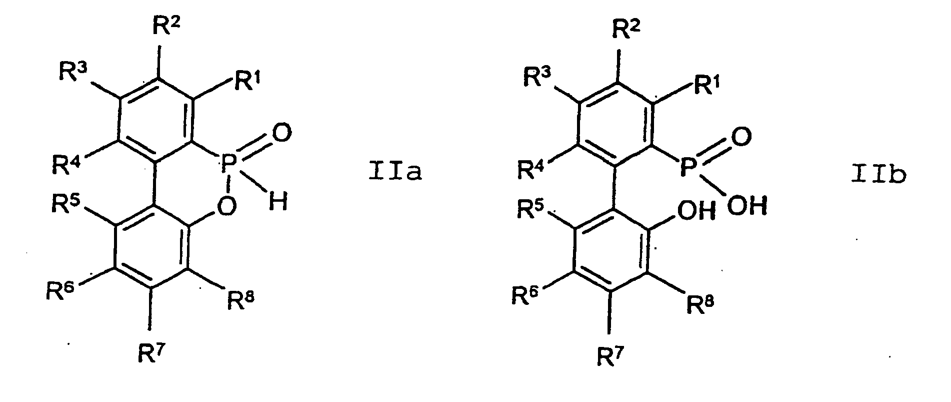 avec un ou plusieurs dérivés d'acides orthocarboxyliques de formule R⁹CX₃ et obtention du dérivé,
R¹ à R⁸ étant, indépendamment les uns des autres, un atome d'halogène ou un groupe hydrocarboné,
R⁹ étant un atome d'halogène ou un groupe hydrocarboné,
les restes X étant identiques ou différents et représentant OR¹⁰, et R¹⁰ étant des groupes hydrocarbonés identiques ou différents,
- les radicaux R¹ à R¹⁰ contenant, indépendamment les uns des autres, éventuellement un ou plusieurs hétéroatomes choisis parmi les atomes d'oxygène, d'azote, de soufre, de phosphore, de silicium et d'halogène,
- deux ou plus des radicaux R¹ à R⁸ étant éventuellement liés avec formation d'un ou plusieurs cycles et
- les radicaux R¹⁰ étant éventuellement liés pour former un cycle.

9. Procédé selon la revendication 8, **caractérisé en ce que** la réaction est effectuée en présence d'un catalyseur acide, le catalyseur étant de préférence un acide protonique ou un acide de Lewis, encore mieux une résine acide, l'acide sulfonique, un acide minéral, l'acide trifluoroacétique, BF₃, FeCl₃, SnCl₄, en particulier le chlorure d'hydrogène ou l'acide chlorhydrique concentré.

10. Procédé selon la revendication 8 ou 9, **caractérisé en ce que** la réaction est effectuée en présence d'un solvant aprotique, de préférence le toluène.

11. Procédé selon la revendication 9 ou 10, **caractérisé en ce que** la réaction est effectuée sans utilisation de solvant protique.

12. Procédé selon l'une quelconque des revendications 8 à 11, **caractérisé en ce que** R⁹ est un atome d'hydrogène, un groupe alkyle ou aryle, de préférence un atome d'hydrogène ou un groupe méthyle.

13. Procédé selon l'une quelconque des revendications 8 à 12, **caractérisé en ce que** les deux restes X sont identiques.

14. Procédé selon l'une quelconque des revendications 8 à 13, **caractérisé en ce que** R¹⁰ et R¹¹ sont choisis, indépendamment l'un de l'autre, parmi des groupes alkyle, alcényle, alcynyle, aryle et glycidyle, de préférence méthyle, éthyle et allyle.

15. Procédé selon la revendication 14, **caractérisé en ce que** le dérivé d'acide orthocarboxylique est un ester d'acide orthocarboxylique R⁹C(OR¹⁰)₃, de préférence un ester d'acide orthoformique, encore mieux l'orthoformiate de triméthyle, l'orthoformiate de triéthyle ou l'orthoformiate de triallyle.

16. Procédé selon l'une quelconque des revendications 8 à 14, **caractérisé en ce que** les radicaux R¹⁰ sont identiques.

17. Utilisation des dérivés selon l'une quelconque des revendications 1 à 7 pour l'ignifugation de matières naturelles et de matières synthétiques.

18. Procédé pour le traitement ignifuge de matières naturelles et de matières synthétiques, dans lequel on ajoute à une matière naturelle ou synthétique un ou plusieurs dérivés selon l'une quelconque des revendications 1 à 7.

19. Matière naturelle ou synthétique à traitement ignifuge, qui contient un ou plusieurs dérivés selon l'une quelconque des revendications 1 à 7, le dérivé étant éventuellement lié chimiquement.

20. Matière synthétique selon la revendication 19, qui est une résine époxy.

21. Utilisation selon la revendication 17, dans laquelle la matière synthétique est une résine époxy.

22. Procédé selon la revendication 18, dans lequel la matière synthétique est une résine époxy.
